(19) Europäisches Patentamt

European Patent Office

Office européen des brevets

(11) **EP 0 791 266 B1**

(12) **EUROPEAN PATENT SPECIFICATION**

(45) Date of publication and mention
of the grant of the patent:
**12.07.2000 Bulletin 2000/28**

(51) Int. Cl.$^7$: **H04N 1/60**

(86) International application number:
**PCT/EP94/03227**

(21) Application number: **94928830.2**

(22) Date of filing: **16.09.1994**

(87) International publication number:
**WO 96/08913 (21.03.1996 Gazette 1996/13)**

(54) **BLACK RECALCULATION FOR ARBITRARY HSL CORRECTIONS IN CMY COLOR SPACE**

SCHWARZWERTWIEDERERRECHNUNG FÜR WILLKÜRLICHE HSL VERBESSERUNG IN EINEM CMY FARBRAUM

NOUVEAU CALCUL DU NOIR DESTINE A DES CORRECTIONS ARBITRAIRES DE TEINTE, SATURATION ET LUMINANCE DANS UN ESPACE DES COULEURS CMJ

(84) Designated Contracting States:
**DE FR GB IT**

(43) Date of publication of application:
**27.08.1997 Bulletin 1997/35**

(73) Proprietor:
**Heidelberger Druckmaschinen
Aktiengesellschaft
69115 Heidelberg (DE)**

(72) Inventors:
• **DICHTER, Wilhelm
Tewksbury, MA 01876 (US)**
• **JUNG, Eggert
D-24217 Schönberg (DE)**

(56) References cited:
**EP-A- 0 323 265          GB-A- 2 182 822**

## Description

### RELATED APPLICATION

The present application is related to our copending US patent application, having the US Serial No. 08/302,247, titled "HSL CORRECTIONS IN CMY COLOR SPACE" (US-A-5 612 795).

### BACKGROUND OF THE INVENTION

This patent describes color manipulation for digital image processing in the prepress industry. A method and an apparatus for processing of color images are already described in the European patent application EP-A2-0 323 265. Three primary color signals are processed to obtain three color reproduction signals and a black reproduction signal. In order to obtain the black reproduction signal, a value corresponding to the minimum signal of the three primary colors is obtained, and the value is transformed by a continuous function having a minimum peak, thereby defining a transformed value as the black reproduction signal.

As a result of attempts to introduce more intuitive color manipulation, HSL (Hue, Saturation, Luminance) changes are executed in three steps. In the first step, the original image is translated from the printable CMY color space to the HSL (or equivalent) color space, which is unprintable, but which is convenient for calculation. In the second step, the HSL changes are applied according to a binary mask and are executed in the new color space. In the third step, the new image is translated back to the printable color space. The original black remains unchanged in such color manipulation.

$$(CMY)_{original} \Rightarrow \text{color space translation} \Rightarrow [HSL(\text{or equivalent})]_{original}$$

$$[HSL(\text{or equivalent})]_{original} \Rightarrow \text{HSL change} \Rightarrow [HSL(\text{or equivalent})]_{new}$$

$$[HSL(\text{or equivalent})]_{new} \Rightarrow \text{color space translation} \Rightarrow (CMY)_{new}$$

In this approach it is difficult to:

1) Accomplish quality translations between color spaces;
2) Meet precision requirements;
4) Achieve interactive performance;
5) Avoid the undesirable effects of binary weighting;
6) Not distort the original gray balance.

### SUMMARY OF THE INVENTION

It is an object of the invention to solve the above identified problems, and particularly not to distort the original gray balance.

According to the method of the invention, a new value of K (black) is defined corresponding with a change in CMY components. Original CMYK printing colors are provided. The original CMY printing colors are corrected to create new CMY printing colors. A value of the smallest one of the original CMY colors is sensed. A value of a smallest one of the new CMY colors is sensed. By use of each of these two smallest values, the original K printing color value is modified to create a recalculated K printing color value.

Color manipulation is simpler and more natural when done by hue, saturation and luminance adjustments. The restoration of the black balance is intuitively expected. The hue, saturation and luminance changes are executed in one step without the color space translations. The restoration of gray balance is based on the original CMYK image combined with the CMY changes applied to it during the color manipulation.

Hue, saturation, and luminance changes are applied directly to the CMY colors and are executed smoothly in the CMY color space according to a weighted mask. After the CMY color manipulation, the new black component is created to restore the gray balance of the original image. The image remains always in the same printable CMYK color space.

All calculations are based on the original CMYK image and are executed on a pixel by pixel basis with respect to the nonlinear gray line rather than to the color cube diagonal (the gray line is the absence of color but changing luminance). The gray line extends nonlinearly through the CMY color space. Both original and new images are maintained in the printable CMY color space.

The new black calculation is executed in one step and is performed on a pixel by pixel basis.

K treatment for arbitrary CMY changes is provided. The following change, applied directly to CMY colors and executed in the CMY color space during the color manipulation, is given:

$$(CMY)_{original} \Rightarrow \text{color manipulation} \Rightarrow (CMY)_{new}$$

The new black component is created from the original black combined with the skeleton black gradation functions of the CMY components before and after the color manipulation.

$$K_{original} \Rightarrow \text{new black creation} \Rightarrow K_{new}$$

## BRIEF DESCRIPTION OF THE DRAWINGS

Figure 1    is a block diagram showing the method of the invention for defining a new value of K corresponding with a change in CMY components;

Figure 2    is an illustration of a CMY color space showing hue change;

Figure 3    is an illustration of a CMY color space showing saturation change; and

Figure 4    is an illustration of a CMY color space showing luminance change.

## DESCRIPTION OF THE PREFERRED EMBODIMENTS

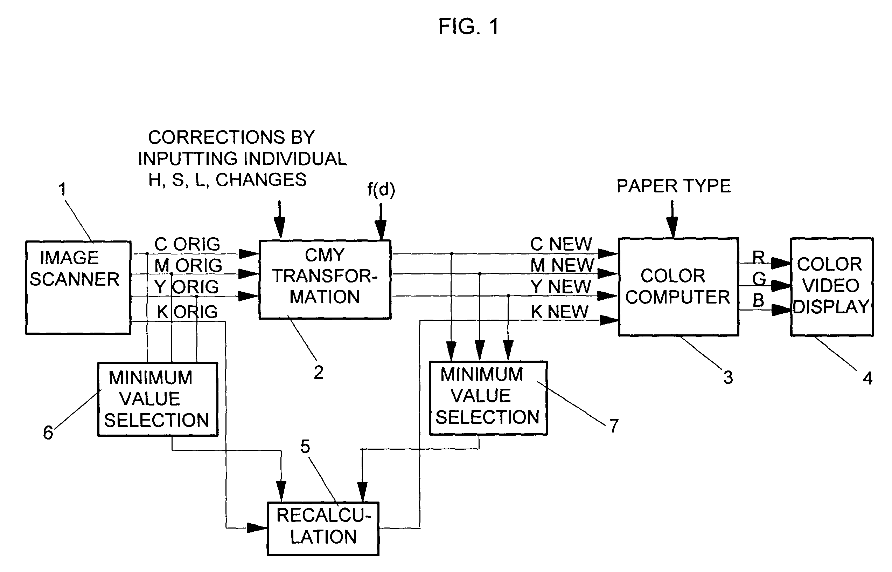

The K recalculation method according to the invention is most easily understood as shown by the block diagram in Figure 1. An image scanner creates original values $C_{original}$, $M_{original}$, $Y_{original}$, and $K_{original}$. The image scanner 1 creates these color values by scanning an original image. The color values are then input into a CMY transformation 2 where new color values $C_{new}$, $M_{new}$, and $Y_{new}$ are created based on HSL changes input into the CMY transformation 2. A masking function f(d) is also input.

The new color values $C_{new}$, $N_{new}$, and $Y_{new}$ are then input into color computer 3 which converts these colors to RGB video signals for input to a color video display 4. Paper type can also be input into the color computer. The above was described in greater detail in my copending US patent application, having the Serial No. 08/302,247, 1994, titled "HSL CORRECTIONS IN CMY COLOR SPACE" (US-A-5 612 795).

According to the present invention, the black value $K_{original}$ is input into a K recalculation 5. The minimum value selection 6 selects the smallest of the three values $C_{original}$, $M_{original}$, and $Y_{original}$. The minimum value selection 7 also selects the smallest of the new color values $C_{new}$, $M_{new}$, and $Y_{new}$. These two minimum values are then input into the K recalculation 5 which then recalculates the K and outputs $K_{new}$.

The HSL changes and K treatment shall now be described in greater detail.

## HUE CHANGE

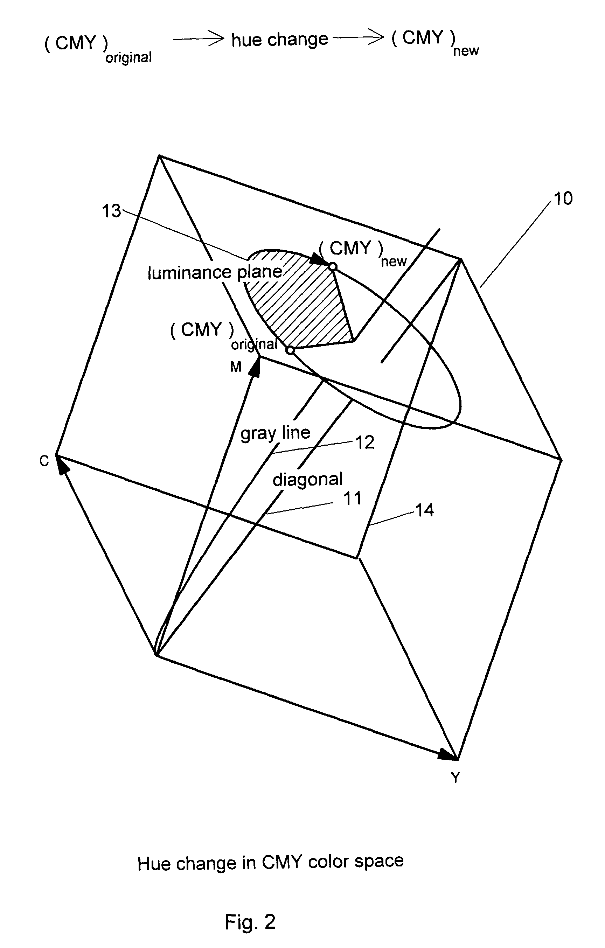

As shown in Figure 2, each hue change is applied directly to the CMY colors and is executed in the CMY color space 10. The original color rotates in its luminance plane 13 (perpendicular to the color cube diagonal 14) around the intersection of this plane with the gray line 12 (the gray line represents absence of color but increasing luminance):

$$(CMY)_{original} \Rightarrow \text{hue change} \Rightarrow (CMY)_{new}$$

A maximum desired hue change is described as:

$$-180° \le CHANGE \le 180°$$

Input data consists of: 1) the image as an array of pixels, with the (CMY)original color components specified for each pixel; and 2) an optional weighting mask as an array of pixels, with a percentage of the maximum desired change specified for each pixel:

$$0 \le d \le 100\% \text{ (for a global change d = 100\%)}$$

For each pixel of the image, the following eight steps are carried out:

1. Two change coefficients are calculated according to the maximum desired hue change and an arbitrary function of the optional weight:

$$COEFF_1 = \cos[f(d)CHANGE] \text{ and } COEFF_2 = \frac{\sqrt{3}}{3} \sin[f(d)CHANGE]$$

2. The intersection of the color cube diagonal with a luminance plane perpendicular to it is calculated as:

$$D = 1/3 (Y_{original} + M_{original} + C_{original})$$

3. The intersection of the gray line with a luminance plane is calculated as the empirically established function of the color cube diagonal intersection with the same plane:

$$Y_{gray} = f_y(D), M_{gray} = f_M(D) \text{ and } C_{gray} = f_c(D)$$

4. New color components (after the hue change) are calculated as:

$$Y_{new} = COEFF_1 (Y_{original} - Y_{gray}) + COEFF_2 (M_{original} - M_{gray} - C_{original} + C_{gray}) + Y_{gray}$$

$$M_{new} = COEFF_1 (M_{original} - M_{gray}) + COEFF_2 (C_{original} - C_{gray} - Y_{original} + Y_{gray}) + M_{gray}$$

$$C_{new} = COEFF_1 (C_{original} - C_{gray}) + COEFF_2 (Y_{original} - Y_{gray} - M_{original} + M_{gray}) + C_{gray}$$

5. The new color components can be clamped between the color limits of the available CMY color space and/or are subjected to the saturation adjustment which preserves the desired hue and luminance values for $0 \leq C_{gray} \leq C_{max}$:

$$C_{new,corr} = COEFF (C_{new} - C_{gray}) + C_{gray}$$

$$M_{new,corr} = COEFF (M_{new} - M_{gray}) + M_{gray}$$

$$Y_{new,corr} = COEFF (Y_{new} - Y_{gray}) + Y_{gray}$$

where COEFF is the smallest of:

$$\frac{C_{limit}-C_{gray}}{C_{new}-C_{gray}}, \frac{M_{limit}-M_{gray}}{M_{new}-M_{gray}} \text{ and } \frac{Y_{limit}-Y_{gray}}{Y_{new}-Y_{gray}}$$

where

$$COLOR_{limit} = 0 \qquad \text{for } COLOR_{new} < 0$$

$$COLOR_{limit} = COLOR_{max} \qquad \text{for } COLOR_{new} > COLOR_{max}$$

$$COLOR_{limit} = COLOR_{new}$$

6. The empirically established skeleton black gradation function for the smallest of the original CMY color components is calculated as:

$$SB_{original} = f_{skeleton\ black}(\text{smallest of } Y_{original}, M_{original}, C_{original})$$

7. The empirically established skeleton black gradation function for the smallest of the new CMY color components is calculated as:

$$SB_{new} = f_{skeleton\ black}(\text{smallest of } Y_{new,\ corr}, M_{new,corr}, C_{new,\ corr})$$

8. The new black component is calculated as:

$$K_{new} = K_{original} - SB_{original} + SB_{new}$$

**SATURATION CHANGE**

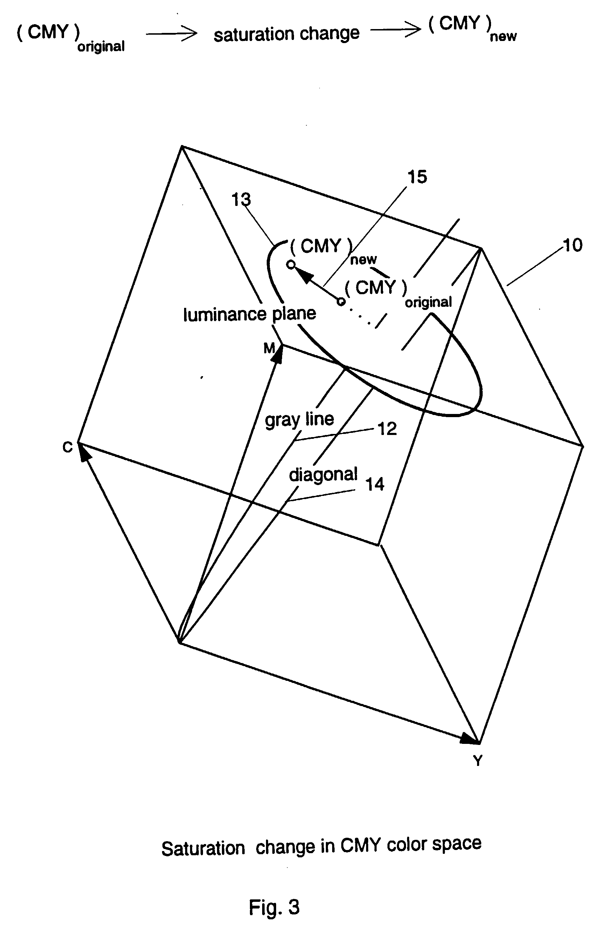

As shown in Figure 3, each saturation change is applied directly to the CMY colors and is executed in the CMY color space 10. The original color moves along the line 15 which connects this color to the intersection of its luminance plane with the gray line 12. Decreases and increases in saturation are achieved by moving to and from this intersection, respectively:

$$(CMY)_{original} \Rightarrow \text{saturation change} \Rightarrow (CMY)_{new}$$

A maximum desired saturation change is described as a percentage of the actual saturation: $-1 \geq$ CHANGE $\geq 0$ for saturation decrease and $0 <$ CHANGE for saturation increase. The input data consists of: 1) the image as an array of pixels, with the $(CMY)_{original}$ color components specified for each pixel; and 2) an optional weighting mask as an array of pixels, with a percentage of the maximum desired change specified for each pixel: $0 \leq d \leq 100\%$ (for a global change d = 100%).

For each pixel of the image, the following eight steps are carried out:

1. The change coefficient is calculated according to the maximum desired saturation change and an arbitrary function of the optional weight:

$$\text{COEFF} = 1 + f(d)\text{CHANGE}$$

2. The intersection of the color cube diagonal with a luminance plane perpendicular to it is calculated as:

$$D = 1/3 \, (Y_{original} + M_{original} + C_{original})$$

3. The intersection of the gray line with a luminance plane is calculated as the empirically established function of the color cube diagonal intersection with the same plane:

$$Y_{gray} = f_y(D), \quad M_{gray} = f_M(D) \quad \text{and} \quad C_{gray} = f_c(D)$$

4. New color components (after the saturation change) are calculated as:

$$Y_{new} = \text{COEFF}(Y_{original} - Y_{gray}) + Y_{gray}$$

$$M_{new} = \text{COEFF}(M_{original} - M_{gray}) + M_{gray}$$

$$C_{new} = \text{COEFF}(C_{original} - C_{gray}) + C_{gray}$$

5. The new color components can be clamped between the color limits of the available CMY color space and/or subjected to the saturation adjustment which preserves the desired hue and luminance values for $0 \leq C_{gray} \leq C_{max}$:

$$C_{new,corr} = \text{COEFF}(C_{new} - C_{gray}) + C_{gray}$$

$$M_{new,corr} = \text{COEFF}(M_{new} - M_{gray}) + M_{gray}$$

$$Y_{new,corr} = \text{COEFF}(Y_{new} - Y_{gray}) + Y_{gray}$$

where COEFF is the smallest of:

$$\frac{C_{limit} - C_{gray}}{C_{new} - C_{gray}}, \frac{M_{limit} - M_{gray}}{M_{new} - M_{gray}} \text{ and } \frac{Y_{limit} - Y_{gray}}{Y_{new} - Y_{gray}}$$

where

$$COLOR_{limit} = 0 \qquad for\ COLOR_{new} < 0$$

$$COLOR_{limit} = COLOR_{max} \qquad for\ COLOR_{new} > COLOR_{max}$$

$$COLOR_{limit} = COLOR_{new}$$

6. The empirically established skeleton black gradation function for the smallest of the original CMY color components is calculated as:

$$SB_{original} = f_{skeleton\ black}(smallest\ of\ Y_{original},\ M_{original},\ C_{original})$$

7. The empirically established skeleton black gradation function for the smallest of the new CMY color components is calculated as:

$$SB_{new} = f_{skeleton\ black}(smallest\ of\ Y_{new,\ corr},\ M_{new,corr},\ C_{new,\ corr})$$

8. The new black component is calculated as:

$$K_{new} = K_{original} - SB_{original} + SB_{new}$$

## LUMINANCE CHANGE

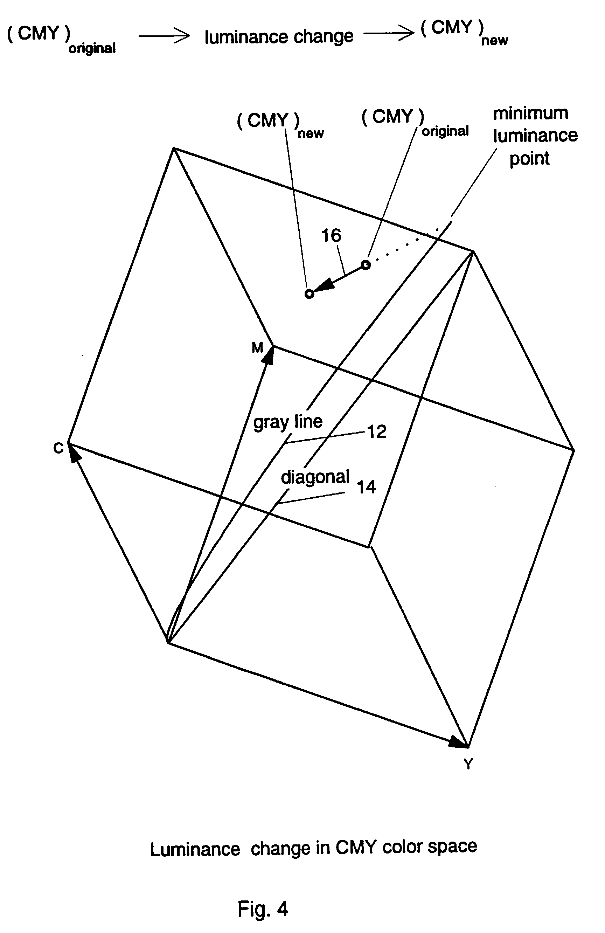

As shown in figure 4, each luminance change is applied directly to the CMY colors and is executed in the CMY color space 10. The original color moves along the line 16 which connects this color to the point of minimum luminance on the gray line 12. Decreases and increases in luminance are achieved by moving to and from this point, respectively:

$(CMY)_{original} \Rightarrow$ luminance change $\Rightarrow (CMY)_{new}$

A maximum desired luminance change is described as a percentage of the actual luminance: $-1 \geq$ CHANGE $\geq 0$ for luminance decrease and $0 <$ CHANGE for luminance increase.
The input data consists of: 1) the image as an array of pixels, with the $(CMY)_{original}$ color components specified for each pixel; and 2) an optional weighting mask as an array of pixels, with a percentage of the maximum desired change specified for each pixel: $0 \leq d \leq 100\%$ (for a global changed = 100%).
For each pixel of the image, the following eight steps are carried out:

1. The change coefficient is calculated according to the maximum desired luminance change and an arbitrary function of the optional weight:

$$COEFF = 1 + f(d)\ CHANGE$$

2. The intersection of the color cube diagonal with the largest color luminance plane is calculated as:

$$D_{max} = 1/3\ (Y_{max} + M_{max} + C_{max})$$

3. The point of minimum luminance on the gray line is described as:

$$Y_{gray,max} = f_y(D_{max}),\ M_{gray,max} = f_M(D_{max})\ and\ C_{gray,max} = f_c(D_{max})$$

4. New color components (after the luminance change) are calculated as:

$$Y_{new} = COEFF(Y_{original} - Y_{gray,\ max}) + Y_{gray,\ max}$$

$$M_{new} = COEFF\ (M_{original} - M_{gray,\ max}) + M_{gray,\ max}$$

$$C_{new} = COEFF(C_{original} - C_{gray,\ max}) + C_{gray,\ max}$$

5. The new color components can be clamped between the color limits of the available CMY color space and/or subjected to the saturation adjustment which preserves the desired hue and luminance values for $0 \leq C_{gray} \leq C_{max}$:

$$C_{new,corr} = COEFF(C_{new} - C_{gray,\ new}) + C_{gray,\ new}$$

$$M_{new,corr} = COEFF(M_{new} - M_{gray,\ new}) + M_{gray,\ new}$$

$$Y_{new,corr} = COEFF(Y_{new} - Y_{gray,\ new}) + Y_{gray,\ new}$$

where COEFF is the smallest of:

$$\frac{C_{limit}-C_{gray}}{C_{new}-C_{gray}}, \frac{M_{limit}-M_{gray}}{M_{new}-M_{gray}} \text{ and } \frac{Y_{limit}-Y_{gray}}{Y_{new}-Y_{gray}}$$

where:

$$COLOR_{limit} = 0 \qquad \text{for } COLOR_{new} < 0$$

$$COLOR_{limit} = COLOR_{max} \qquad \text{for } COLOR_{new} > COLOR_{max}$$

$$COLOR_{limit} = COLOR_{new}$$

The intersection of the color cube diagonal with the new color luminance plane is calculated as:

$$D_{new} = 1/3\ (Y_{new} + M_{new} + C_{new})$$

The intersection of the gray line with the new color luminance plane is calculated as the empirically established function of the color cube diagonal intersection with the same plane:

$$Y_{gray,new} = f_y\ (D_{new}),\ M_{gray,new} - f_M(D_{new}) \text{ and } C_{gray,new} = f_c(D_{new})$$

6. The empirically established skeleton black gradation function for the smallest of the original CMY color components is calculated as:

$$SB_{original} = f_{skeleton\ black}(\text{smallest of } Y_{original}, M_{original}, C_{original})$$

7. The empirically established skeleton black gradation function for the smallest of the new CMY color components is calculated as:

$$SB_{new} = f_{skeleton\ black}(\text{smallest of } Y_{new,corr}, M_{new,corr}, C_{new,corr})$$

8. The new black component is calculated as:

$$K_{new} = K_{original} - SB_{original} + SB_{new}$$

## CREATION OF BLACK COMPONENT

For each of the above hue, saturation and luminance changes, as shown in Figure 1, the new black component is created from the original black combined with the skeleton black gradation functions of the CMY components before and after the color manipulation:

$$K_{original} \Rightarrow \text{new black creation} \Rightarrow K_{new}$$

Summarizing, the input data consists of the image as an array of pixels, with the $(CMYK)_{original}$ color components specified for each pixel. For each pixel of the image, the following three steps are carried out:

1. The empirically established skeleton black gradation function for the smallest of the original CMY color compo-

nents is calculated as:

$$SB_{original} = f_{skeleton\ black}\ (smallest\ of\ Y_{original},\ M_{original},\ C_{original})$$

2. The empirically established skeleton black gradation function for the smallest of the new CMY color components is calculated as:

$$SB_{new} = f_{skeleton\ black}\ (smallest\ of\ Y_{new,corr},\ M_{new,corr},\ C_{new,corr})$$

3. The new black component is calculated as:

$$K_{new} = K_{original} - SB_{original} + SB_{new}$$

This new black value is clamped between zero and some maximum value balance.

## Claims

1.  A method for color manipulation for digital image processing in the prepress industry, comprising the steps of :

    providing original CMYK values for the printing colors of the image wherein the original CMY values are representing a printable color space and the original K value is the value for the original black printing color,

    correcting the original CMY values to create new CMY values for the printing colors,

    sensing the smallest value of the original CMY values,

    sensing the smallest value of the new CMY values, and

    modifying the original K value by use of each of said smallest value of the original CMY values and said smallest value of the new CMY values to create a new K printing color value corresponding to the new CMY values.

2.  A method according to claim 1 wherein the original K value is modified by:

    defining a gradation function,

    applying said gradation function to both said smallest value of the original CMY values and said smallest value of the new CMY values to

    obtain first and second function values respectively, and

    subtracting the first function value from said original K value and adding the second function value to obtain said new K printing color value.

3.  A method according to claim 2 including the step of clamping the new K printing color value between zero and some maximum value.

4.  A method according to claim 1 wherein said new K printing color value corrects for distortion of original gray balance.

5.  A method according to claim 1 wherein the original CMY values are corrected by inputting HSL changes in a CMY transformation to create said new CMY values.

6.  A method according to claim 5 wherein said new CMY values are input to a color computer which then outputs RGB video signals for driving a color video display.

## Patentansprüche

1.  Verfahren zur Farbmanipulation bei der digitalen Bildverarbeitung in der Druckvorstufen-Industrie, bestehend aus den Schritten:

Bereitstellen von originalen CMYK Werten für die Druckfarben des Bildes, wobei die originalen CMY Werte einen druckbaren Farbraum repräsentieren und der originale K Wert der Wert für die originale schwarze Druckfarbe ist,

Korrigieren der originalen CMY Werte, um neue CMY Werte für die Druckfarben zu erzeugen,

Feststellen des kleinsten Wertes der originalen CMY Werte,

Feststellen des kleinsten Wertes der neuen CMY Werte, und

Verändern des originalen K Wertes mittels jedes kleinsten Wertes sowohl der originalen CMY Werte als auch der neuen CMY Werte, um einen neuen K Druckfarbenwert zu erzeugen, entsprechend den neuen CMY Werten.

2. Verfahren nach Anspruch 1, wobei der originale K Wert verändert wird durch:

Definieren einer Gradationsfunktion,

Anwenden der Gradationsfunktion sowohl auf den kleinsten Wert der originalen CMY Werte als auch auf den kleinsten Wert der neuen CMY Werte, um jeweils erste und zweite Funktionswerte zu erhalten, und

Subtrahieren des ersten Funktionswertes von dem originalen K Wert und Addieren des zweiten Funktionswertes, um den neuen K Druckfarbenwert zu erhalten.

3. Verfahren nach Anspruch 2, wobei der Schritt zum Begrenzen des neuen K Druckfarbenwertes zwischen Null und einem Maximalwert eingeschlossen ist.

4. Verfahren nach Anspruch 1, wobei der neue K Druckfarbenwert eine Verzerrung der originalen Graubalance korrigiert.

5. Verfahren nach Anspruch 1, wobei die originalen CMY Werte durch Eingeben von HSL Veränderungen in eine CMY Transformation korrigiert werden, um die neuen CMY Werte zu erzeugen.

6. Verfahren nach Anspruch 5, wobei die neuen CMY Werte in einen Farbrechner eingegeben werden, der dann RGB Videosignale zur Ansteuerung eines Farbvideodisplays ausgibt.

**Revendications**

1. Procédé de manipulation de couleurs pour le traitement d'images numériques dans l'industrie de la pré-impression, comprenant les étapes consistant à :

- créer des valeurs CMYK originales pour les couleurs d'impression de l'image, dans lesquelles les valeurs CMY originales représentant un espace de couleurs imprimables et la valeur K originale est la valeur pour la couleur d'impression en noir originale,
- connecter les valeurs CMY originales pour créer de nouvelles valeurs pour les couleurs d'impression,
- détecter la plus petite des valeurs CMY originales,
- détecter la plus petite des nouvelles valeurs CMY, et - modifier la valeur K originale pour l'utilisation de chacune de la plus petite des valeurs de CMY originales et de la plus petite des nouvelles valeurs de CMY, pour créer une nouvelle valeur de couleur d'impression K correspondant aux nouvelles valeurs CMY.

2. Procédé selon la revendication 1,
dans lequel
la valeur K originale est modifiée en :

- définissant une fonction de gradation,
- appliquant cette fonction de gradation à la fois à la plus petite des valeurs CMY, pour obtenir respectivement une première valeur de fonction et une seconde valeur de fonction, et

- soustrayant la première valeur de fonction de la valeur K originale et ajoutant la seconde valeur de fonction pour obtenir la nouvelle valeur de couleur d'impression K.

3. Procédé selon la revendication 2,
comprenant :

l'étape consistant à bloquer la nouvelle valeur de couleur d'impression K entre zéro et une certaine valeur maximum.

4. Procédé selon la revendication 1,
dans lequel
la nouvelle valeur de couleur d'impression K corrige la distorsion de l'équilibre de gris original.

5. Procédé selon la revendication 1,
dans lequel
les valeurs CMY originales sont corrigées en introduisant des changes de TSL (Teinte, Saturation, Luminance) dans une transformation de CMY pour créer les nouvelles valeurs de CMY.

6. Procédé selon la revendication 5,
dans lequel
les nouvelles valeurs CMY sont introduites dans un ordinateur de couleurs qui fournit ensuite en sortie des signaux RVB (Rouge, Vert, Bleu) pour commander un afficheur vidéo en couleurs.

# FIG. 1

CORRECTIONS BY
INPUTTING INDIVIDUAL
H, S, L, CHANGES

f(d)

PAPER TYPE

$(CMY)_{original}$ ──────> hue change ──────> $(CMY)_{new}$

Hue change in CMY color space

Fig. 2

$$(\,CMY\,)_{original} \longrightarrow saturation\ change \longrightarrow (\,CMY\,)_{new}$$

Saturation change in CMY color space

Fig. 3

$(CMY)_{original}$ $\longrightarrow$ luminance change $\longrightarrow$ $(CMY)_{new}$

Luminance change in CMY color space

Fig. 4